# EUROPEAN PATENT SPECIFICATION

(11) **EP 4 650 599 B1**
(45) Date of publication and mention of the grant of the patent: **25.11.2026**
(21) Application number: 24175993.5
(22) Date of filing: 15.05.2024
(51) Int. Cl.: F03D 80/30, F03D 80/40

(54) **WIND TURBINE AND METHOD FOR OPERATING A WIND TURBINE**
WINDENERGIEANLAGE UND VERFAHREN ZUM BETREIBEN EINER WINDENERGIEANLAGE
ÉOLIENNE ET PROCÉDÉ DE FONCTIONNEMENT D'UNE ÉOLIENNE

(43) Date of publication of application: 19.11.2025
(73) Proprietor: Nordex Energy SE & Co. KG, 22419 Hamburg (DE)
(72) Inventor: SACHSE, Konrad, 22419 Hamburg (DE); KREMER, Jochen, 22419 Hamburg (DE); KRUTH, Stefan, 22419 Hamburg (DE); HEICK, Oliver, 22419 Hamburg (DE); RAUTMANN, Christof, 22419 Hamburg (DE); KORPELAINEN, Jörgen, 22419 Hamburg (DE)
(74) Representative: Epping - Hermann - Fischer

(56) References cited:
- CN-A- 115 614 233
- JP-B2- 6 467 683

## Description

The present disclosure relates to a wind turbine and a method for operating a wind turbine.

Wind turbines are widely known and are used to convert wind energy into electrical energy. Wind turbines are operated under various ambient conditions, which makes the components of the wind turbine subjected to harsh atmospheric conditions including, but not limited to, extreme cold weather, lightning, and storms. A rotor blade of the wind turbine may also become electrically charged with respect to ground due to air friction or due to precipitation, which may lead to accumulation of electrostatic charge on the surface of the rotor blade. The presence of electrostatic charge may interfere with the working of the electrical components present in the wind turbine. On certain occasion, due to the presence of static charge, current spikes may be observed with the help of a current measuring device. The electrical system in the wind turbine may become prone to malfunctions and errors due to accumulated static charge, eventually causing the wind turbine to get automatically triggered for a shutdown process and thereby affecting the overall energy demand. If this electrostatic charge cannot be dissipated, the electrostatic charge can damage the component or the whole wind turbine.

Prior art document CN 115614233 A discloses a wind turbine blade de-icing system based on low-resistance metal materials, which can simplify the installation process of an electric heating de-icing system while ensuring the de-icing effect and lightning protection capability.

One object to be achieved is to provide a wind turbine having a system for dissipating and/or determining electrostatic charge accumulation in an electrical system, particularly in a rotor blade of the wind turbine and a method to discharge the accumulated electrostatic charge. Further objects to be achieved are to provide a method for operating such a wind turbine as well as a computer program, a computer-readable data carrier and a control device for executing the method.

First, the wind turbine is specified.

According to an embodiment, the wind turbine comprises a rotor blade, an electrical system embedded in the rotor blade and at least one switchable connection between the electrical system and ground. The at least one switchable connection is controllably switchable between an open state and a closed state so that, when the at least one switchable connection is in the closed state, the electrical system is grounded, and, when the at least one switchable connection is in the open state, the electrical system is not grounded.

The present invention is, inter alia, based on the recognition that rotor blades which have an electrical system can become electrically charged with respect to ground, for example due to air friction and/or precipitation static, for instance in humid air conditions. To eliminate the accumulated electrostatic charge, the electrical system needs to be grounded, but at the same time the electrical system remains inoperable until it is disconnected from the ground.

To this end, the present invention suggests providing a switchable connection which can be controllably switched in order to ground the electrical system and to dissipate the electrostatic charge to the ground.

The wind turbine comprises, for instance, a rotor with one or more, for example three, rotor blades. The rotor may be coupled to a generator, e.g. via a gearbox, so that rotation of the rotor can be transformed into electrical energy.

An electrical system is assigned to the rotor blade, particularly embedded in the rotor blade. The electrical system comprises, for example, one or more conductors through which, during operation of the electrical system, electric current is running. The electrical system may comprise a lightning protection system which, when a lightning strikes the rotor blade, automatically establishes an electrical connection to ground and safely conducts the lightning current to the ground without damaging the wind turbine. This electrical connection is herein also called "overvoltage connection". The overvoltage connection is a non-switchable connection because it cannot be switched in a controlled manner. Instead, the overvoltage connection is established automatically, for example due to electrical breakdown when a breakdown voltage is reached.

The switchable connection can be switched controllably. It may be switchable intentionally. The switchable connection may comprise a mechanical switch which can be controlled electronically with the help of a corresponding control signal. For example, the switchable connection can be switched on and off in every situation of the wind turbine, e.g. independently of the electrostatic charge which has accumulated in the electrical system.

When the at least one switchable connection is in the closed state, i.e. when the at least one switchable connection is switched on, the electrical system is connected to ground, so that the accumulated electrostatic charge in the electrical system can be dissipated to ground. When the at least one switchable connection is switched off, i.e. in the open state, the electrical system is not grounded. That is, electrostatic charge in the electrical system, which does not result in a voltage difference to ground as high as the breakdown voltage, cannot be dissipated to ground. The accumulated electrostatic charge is measured in the power box, disposed, for example, between a heating cable and the ground. The measurement is carried out by means of DC voltage measurement and threshold value signaling over a time average.

The wind turbine may comprise several switchable connections which can be controllably switched in order to establish an electrical connection between the electrical system and ground. All features disclosed herein with respect to one switchable connection are also disclosed for all other switchable connections.

According to a further embodiment, the electrical system comprises a blade heating system for preventing accumulation of ice on the rotor blade. For example, when the blade heating system is operated, it heats up the outer surface of the rotor blade, so that ice cannot be formed on the rotor blade or so that already accumulated ice melts.

According to a further embodiment, the electrical system comprises a first main conductor. The first main conductor is assigned to the suction side of the rotor blade. For example, the first main conductor is securely disposed on or embedded in the suction side. The suction side may be formed by an upper half shell of the rotor blade.

According to a further embodiment, the electrical system comprises a second main conductor. The second main conductor is assigned to the pressure side of the rotor blade. For example, the second main conductor is securely disposed on or embedded in the pressure side. The pressure side may be formed by a lower half shell of the rotor blade.

According to a further embodiment, the at least one switchable connection is electrically coupled to the first main conductor and a ground terminal. Alternatively, the at least one switchable connection may be electrically coupled to the second main conductor and the ground terminal. In a further alternative, there are two or more switchable connections and at least one switchable connection is electrically coupled to the first main conductor and the ground terminal and at least one further switchable connection is electrically coupled to the second main conductor and the ground terminal.

According to a further embodiment, the blade heating system is supplied with power via the first main conductor and the second main conductor during operation. A further switch may be used to enable or disable power transfer to the heating system via the first and the second main conductors.

By way of example, the blade heating system comprises at least one electro-thermal heating element. The electro-thermal heating element comprises, for example, a heating wire. When electric current is flowing through the electro-thermal heating element, the electro-thermal heating element heats up, which results in heating of the rotor blade. The electro-thermal heating element may be embedded in or located underneath the rotor blade shell(s). The electro-thermal heating element may be arranged to transfer the electric current between the first and the second main conductor. For example, when the above-mentioned further switch is closed, electric current flows between the first and the second main conductor via the at least one electro-thermal heating element. When the further switch is open, no current is flowing through the at least one electro-thermal heating element. The heating system may be a thermal resistance heating system.

According to a further embodiment, the wind turbine further comprises at least one needle electrode extending from a trailing edge of the rotor blade. A plurality of needle electrodes may extend from the trailing edge of the rotor blade. The needle electrodes may be spaced from each other in longitudinal direction which is a direction parallel to the length axis of the rotor blade.

The needle electrode(s) can further help to prevent or reduce electrostatic charge in the electrical system of the rotor blade and/ or electrostatic charge accumulated on the surface of the rotor blade. At least one needle electrode may be electrically connected to the first main conductor and/or to the second main conductor and/or to the lightning protection system. Due to the needle-shape with a sharp edge of the end, an electric field will develop and cause corona discharge which will transfer electrostatic charge to the air. In this way, the electrostatic charge is limited.

Next, the method for operating a wind turbine is specified. The method is, in particular, suitable for operating the wind turbine according to any of the embodiments described herein. Therefore, all features disclosed for the wind turbine are also disclosed for the method and vice versa.

According to an embodiment, the method comprises a step of determining first information which is representative of whether the electrical system is to be operated or to be stopped if already in operation. If the first information is representative of the fact that the electrical system is to be operated, a first control signal is generated for the at least one switchable connection. The first control signal is configured to switch the at least one switchable connection into the open state. If, on the other hand, the first information is representative of the fact that operation of the electrical system is to be stopped, a second control signal is generated for the at least one switchable connection. The second control signal is configured to switch the least one switchable connection into the closed state.

This method is particularly useful when the electrical system of the wind turbine cannot be operated when grounded. The ground connection is therefore only established when the electrical system is stopped or is to be stopped, i.e. operation is at least interrupted. During the interruption of operation of the electrical system, the accumulated electrostatic charge can be dissipated to ground via the at least one closed switchable connection. When the electrical system needs to return to operation, the at least one switchable connection can again be opened and the connection to ground is removed. For example, the switchable connection is closed as long as the operation of the electrical system is stopped or paused, respectively. The switchable connection may be opened as long as the electrical system is operated.

The method specified herein is, in particular, a computer-implemented method, i.e. is performed with the help of a computer or a processor.

The control signals are configured to switch the switchable connection between open state and closed state. This means that the control signals, when received by a suitable control unit, cause the control unit to switch the switchable connection. The control unit may be an actuator, for example.

According to a further embodiment, the first control signal and the second control signal are generated repeatedly and alternatingly.

According to a further embodiment, for example during icing conditions, a time interval from generating the first control signal to generating the second control signal is longer than a time interval from generating the second control signal to generating the next first control signal. Particularly, the time interval in which the electrical system is operated is longer than the time interval in which the operation of the electrical system is stopped or paused, respectively. However, in another embodiment, for example in the absence of icing conditions, the time interval from generating the first control signal to generating second control signal may vary as per requirement.

According to a further embodiment, the lengths of the time intervals are predetermined. Accordingly, the operation of the electrical system is stopped/paused in a planned manner in order to enable discharging of the electrical system.

According to a further embodiment, the method further comprises the step of providing second information, which is representative of electrostatic charge in the rotor blade, particularly in the electrical system thereof. The first information is then determined depending on the second information. For example, if a first criterion is fulfilled, which includes that the second information, representative of the electrostatic charge formation, exceeds a predetermined threshold value, the first information is determined such that it is representative of that the electrical system is to be stopped. For example, if a second criterion is fulfilled, which includes that the second information, representative of the electrostatic charge formation, is below or equal to the predetermined threshold, the first information is determined such that it is representative of that the electrical system is to be started or continued.

In other words, if the condition is fulfilled that the second information is representative of an amount of electrostatic charge which exceeds a predetermined threshold value, and, optionally, if one or more further conditions are fulfilled, the first information is determined such that it is representative of the fact that the operation of the electrical system is to be stopped. The predetermined threshold value is, in particular, smaller than the breakdown voltage. If, on the other hand, the second information is representative of an amount of electrostatic charge equal or below the predetermined threshold value, and, optionally, if one or more further conditions are fulfilled, the first information is determined to start/continue operation of the electrical system.

The second information may be determined by detecting the electrostatic charge with the help of a DC-offset in the phase to ground voltage. The first information depends on second information and optionally, also on wind turbine information including, but not limited to, generated power, ambient temperature, frequency of oscillation, and icing sensor signals etc.

Next, the computer program, the computer-readable data carrier and the control device are specified.

According to an embodiment, the computer program comprises instructions which, when the program is executed by a control device, cause the control device to carry out the method for operating a wind turbine according to any one of the embodiments described herein.

According to an embodiment, the computer-readable data carrier has the computer program stored thereon.

According to an embodiment, the control device comprises means configured to execute the method for operating a wind turbine according to any one of the embodiments described herein. Particularly, the method is carried out when the above-mentioned computer program is executed by the control device. All features disclosed for the method are therefore also disclosed for the control device and vice versa.

The control device comprises, for example, at least one processor and/or at least one programmable logic controller, plc for short. The control device may be part of the wind turbine specified herein.

According to an embodiment, the control device is signally connected or signally connectable to a control unit for the at least one switchable connection in order to switch the at least one switchable connection according to the first and second control signals. For example, when the control unit receives the control signals, the switchable connection is switched accordingly.

Hereinafter, the wind turbine, the method for operating a wind turbine and the control device will be explained in more detail with reference to the drawings on the basis of exemplary embodiments. The accompanying figures are included to provide a further understanding. The features and embodiments described in connection with the figures can also be combined with one another according to further embodiments, even if not all such combinations are explicitly described. Furthermore, the embodiments described in connection with the figures can alternatively or additionally have further features according to the description in the general part.

In the figures, elements of the same structure and/or functionality may be referenced by the same reference signs. It is to be understood that the embodiments shown in the figures are illustrative representations and are not necessarily drawn to scale. Insofar as elements or components correspond to one another in terms of their function in different figures, the description thereof is not repeated for each of the following figures. For the sake of clarity, elements might not appear with corresponding reference symbols in all figures.
Figure 1 shows an exemplary embodiment of a wind turbine,
Figure 2 shows an exemplary embodiment of a rotor blade,
Figure 3 shows a flowchart of an exemplary embodiment of the method for operating a wind turbine,
Figure 4 shows a schematic view of an exemplary embodiment of a system comprising a rotor blade and a control device.

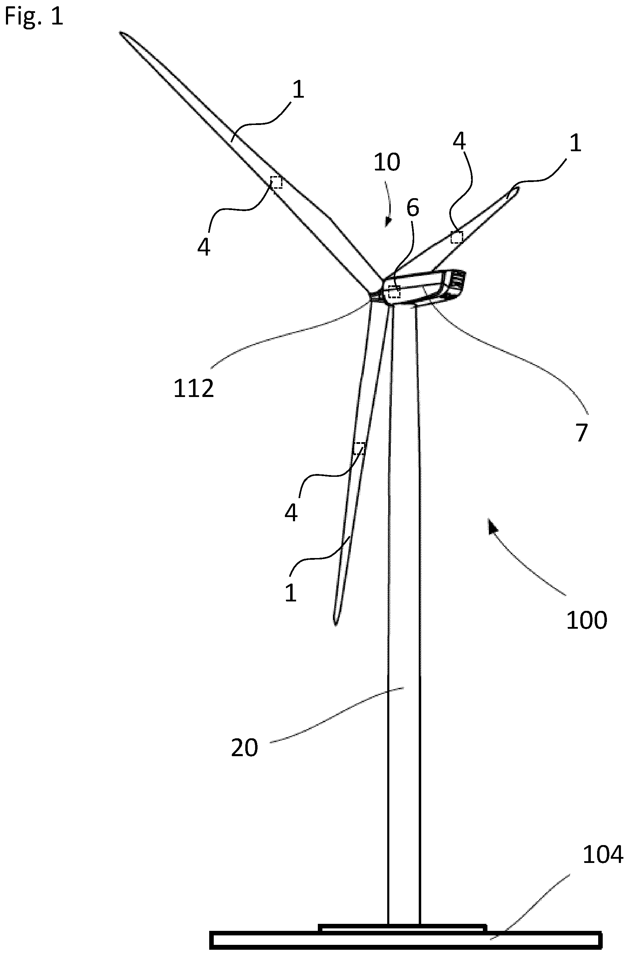

Figure 1 shows a schematic view of an exemplary embodiment of a wind turbine 100 which comprises a tower 20. The tower 20 is fixed to the ground by means of a foundation 104. At one end of the tower 20, opposite to the ground, a nacelle 7 is rotatably mounted. The nacelle 7 comprises a generator (not shown) which is coupled to a rotor 10 via a gearbox (not shown). The rotor 10 comprises three (wind turbine) rotor blades 1 which are arranged on a rotor hub 112, said rotor hub 112 being connected to a rotor shaft (not shown).

During operation, the rotor 10 is set in rotation by an air flow, for example wind. This rotational movement is transmitted to the generator via the rotor shaft and the gearbox. The generator converts the mechanical energy of the rotor 10 into electrical energy.

Each rotor blade 1 is equipped with an electrical system 4. Such an electrical system 4 may comprise a blade heating system. Indeed, when the wind turbine 100 is located in a cold region, it may happen that ice accumulates on the rotor blades 1. The blade heating system helps to prevent the accumulation of ice or helps to get rid of the ice. A blade heating system is only one example. Other electrical systems may be used as well. For example, the electrical system 4 may comprise a light system and/or an acoustic system in order to emit light and/or acoustic signals. This may prevent collision with flying objects, for example. The electrical system 4 of each rotor blade 1 may further comprise a lightning protection system in order to dissipate lightning currents caused by lightnings.

The operation of the electrical systems 4 of the rotor blades 1 is controlled by a control device 6 which, in this example, is located in the nacelle 7. It could also be located in the rotor hub 112, for example.

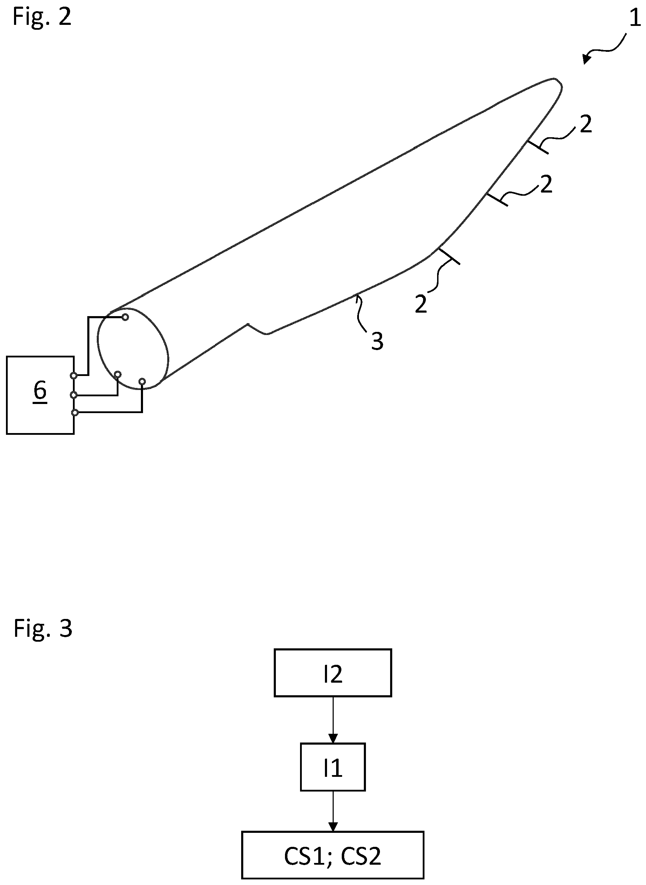

Figure 2 shows an exemplary embodiment of a single rotor blade 1 signally connected to the control device 6. The rotor blade 1 comprises a trailing edge 3 from which a plurality of needle electrodes 2 extend. The needle electrodes 2 enable discharging of electrostatic charge which has accumulated in the electrical system of the rotor blade 1. Due to the sharp edge of the needle electrodes 2, high electric fields can develop there and cause corona discharge which helps to transfer the electrostatic charge to the surrounding air.

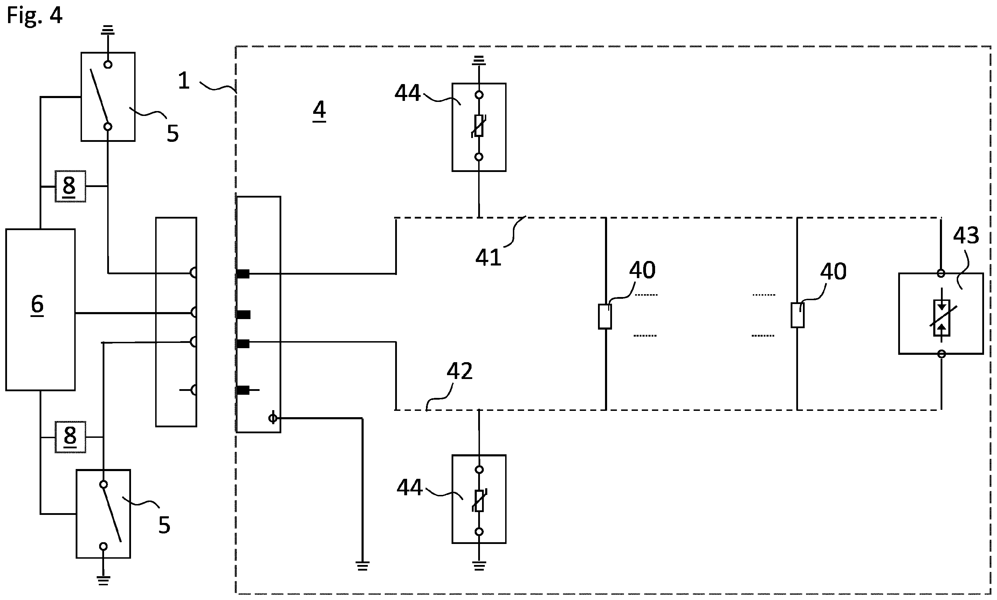

Additionally to the needle electrodes 2, the rotor blade 1 is equipped with further means for dissipating electrostatic charge. Such means are indicated in Figure 4.

Figure 4 is a schematic view of a system with the rotor blade 1 and the control device 6 signally connected to each other.

This system may be used in the exemplary embodiment of Figure 1, for example.

The rotor blade 1 comprises the electrical system 4 mentioned above. The electrical system 4 is electrically connected to the control device 6 and to power boxes 8 via a rotary electrical interface which enables power and/or electrical signal and/or optical signal transfer between the control device 6 and power boxes 8 and the electrical system 4. The rotary electrical interface may be a slip ring unit or a galvanic rotational transfer system.

The electrical system 4 comprises a first main conductor 41 and a second main conductor 42. The first main conductor 41 is, for example, securely disposed on the suction side of the rotor blade 1 and the second main conductor 42 is, for example, securely disposed on the pressure side of the rotor blade 1.

The first main conductor 41 and the second main conductor 42 are electrically connected or connectable to each other via electro-thermal heating elements 40, which are part of the blade heating system. The connection of first main conductor 41 or the second main conductor 42 to the ground can be switchably controlled with the help of the control device 6 to dissipate electrostatic charge or to connect to a power supply by disconnecting the first main conductor 41 and second main conductor 42 from the ground to operate the heating system.

The first main conductor 41 and the second main conductor 42 are both connected to protection devices 44. The protection devices 44 automatically connect the main conductors 41, 42 to ground when a breakdown voltage between the main conductors 41, 42 and ground is reached during lightning condition. The main conductors 41, 42 together with the associated protection devices 44 and a surge protection device 43 as shown in Figure 4 are part of the lightning protection system of the rotor blade 1. The surge protection device 43 is open until a lightning strikes the rotor blade.

In order to enable the dissipation of electrostatic charge in the rotor blade 1 to ground before the breakdown voltage is reached, two switchable connections 5 which can be controllably switched are provided. These switchable connections 5 can be switched intentionally if discharging of the rotor blade 1 is desired. The switchable connections 5 can be controlled via the control device 6. When the switchable connections 5 are open, the main conductors 41, 42 are not connected to ground. When the switchable connections 5 are closed, the main conductors 41, 42 are connected to ground terminals and electrostatic charge can be dissipated.

Figure 3 shows an exemplary embodiment of the method for operating a wind turbine based on a flow chart. The wind turbine is, for example, the wind turbine of Figure 1 and comprises the system of Figure 4.

The method comprises a step in which second information I2 is provided. The second information I2 is representative of electrostatic charge formation in the rotor blade 1. For example, the second information I2 is representative of the amount of electrostatic charge in the first and/or the second main conductor of the rotor blade 1.

If a first criterion is fulfilled, which includes that the second information I2 exceeds a predetermined threshold value, i.e. the amount of electrostatic charge in the rotor blade exceeds a predetermined threshold value, first information I1 is generated such that the first information I1 is representative of the fact that operation of the electrical system 4 is to be stopped. On the other hand, if a second criterion is fulfilled which includes that the second information I2 does not exceed the predetermined threshold value, i.e. the amount of electrostatic charge in the rotor blade does not exceed the predetermined threshold value, the first information I1 is determined such that it is representative of the fact that the electrical system is to be operated.

Then, control signals CS1, CS2 are determined depending on the first information I1. A first control signal CS1 is generated if the first information I1 is representative of the fact that the electrical system is to be operated and a second control signal CS2 is generated if the first information I1 is representative of the fact that the electrical system is not to be operated, e.g. stopped or paused. The first control signal CS1 is for the at least one switchable connection 5 and is configured to switch the at least one switchable connection 5 into the open state. The second control signal CS2 is also for the at least one switchable connection 5 and is configured to switch the at least one switchable connection 5 into the closed state.

The method can, preferably, be a computer-implemented method, i.e. is performed with the help of a computer or a processor. In particular, the method can be carried out by a controller, preferably the control device 6. Thus, the method of Figure 3 may be performed by the control device 6. For this purpose, the control device 6 may comprise at least one processor. The control device 6 may further comprise a power box 8 for powering the electrical conductors 41, 42. Carrying out the method can be caused by a computer program that is executed by the control device 6 and that comprises instructions which, when the program is executed by the control device 6, cause the control device 6 to carry out the method for operating the wind turbine. The computer program can be stored on a computer-readable data carrier. Thus, Figure 3 also represents the computer program and the computer-readable data carrier.

The invention described herein is not limited by the description in conjunction with the exemplary embodiments. Rather, the invention comprises any new feature as well as any combination of features, particularly including any combination of features in the patent claims, even if said feature or said combination per se is not explicitly stated in the patent claims or exemplary embodiments.

### Reference signs

- 1: rotor blade
- 2: needle electrode
- 3: trailing edge
- 4: electrical system
- 5: switchable connection
- 6: control device
- 7: nacelle
- 8: power box
- 10: rotor
- 20: tower
- 40: electro-thermal heating element
- 41: first main conductor
- 42: second main conductor
- 43: surge protection device
- 44: protection device
- 100: wind turbine
- 104: foundation
- 112: rotor hub
- I1: first information
- I2: second information
- CS1: first control signal
- CS2: second control signal

## Claims

1. A wind turbine (100) comprising
- a rotor blade (1),
- an electrical system (4) embedded in the rotor blade (1),
- a system for determining and dissipating electrostatic charge accumulation in the electrical system, and
- at least one switchable connection (5) between the electrical system (4) and ground, wherein
- the at least one switchable connection (5) is controllably switchable between an open state and a closed state so that
- when the at least one switchable connection (5) is in the closed state, the electrical system (4) is grounded, and
- when the at least one switchable connection (5) is in the open state, the electrical system (4) is not grounded.

2. The wind turbine (100) according to claim 1, wherein
- the electrical system (4) comprises a blade heating system (40) for preventing accumulation of ice on the rotor blade (1).

3. The wind turbine (100) according to claim 1 or 2, wherein
- the electrical system (4) comprises a first main conductor (41) securely disposed on a suction side (11) of the rotor blade (1) and a second main conductor (42) securely disposed on a pressure side (12) of the rotor blade (1), and
- the at least one switchable connection (5) is electrically coupled to the first main conductor (41) and a ground terminal and/or the at least one switchable connection (5) is electrically coupled to the second main conductor (42) and the ground terminal.

4. The wind turbine (100) according to claims 2 and 3, wherein
- during operation, the heating system (40) is supplied with power via the first main conductor (41) and the second main conductor (42).

5. The wind turbine (100) according to any one of the preceding claims, further comprising
- at least one needle electrode (2) extending from a trailing edge (3) of the rotor blade (1).

6. A method for operating the wind turbine (100) according to any one of claims 1 to 5, comprising
- determining first information (I1) which is representative of whether the electrical system (4) is to be operated or is to be stopped if already in operation;
- generating a first control signal (CS1) for the at least one switchable connection (5), which is configured to switch the at least one switchable connection (5) into the open state if the first information (I1) is representative of the fact that the electrical system (4) is to be operated;
- generating a second control signal (CS2) for the at least one switchable connection (5), which is configured to switch the at least one switchable connection (5) into the closed state if the first information (I1) is representative of the fact that operation of the electrical system (4) is to be stopped;
- providing second information (I2) which is representative of electrostatic charge formation in the rotor blade (1); and
- determining the first information (I1) depending on the second information (I2).

7. The method according to claim 6, wherein
- the first control signal (CS1) and the second control signal (CS2) are generated repeatedly and alternatingly.

8. The method according to claim 7, wherein
- during icing condition, a time interval from generating the first control signal (CS1) to generating the second control signal (CS2) is longer than a time interval from generating the second control signal (CS2) to generating the next first control signal (CS1).

9. The method according to claim 8, wherein
- the lengths of the time intervals are predetermined.

10. A computer program comprising instructions which, when the program is executed by a control device (6), cause the control device (6) to carry out the method of any one of claims 6 to 9.

11. A computer-readable data carrier having the computer program of claim 10 stored thereon.

12. A control device (6) comprising means for executing the method according to any one of claims 6 to 10.

13. Wind turbine (100) according to any of claims 1 to 5 comprising the control device (6) according to claim 12.

## Patentansprüche

1. Windenergieanlage (100), aufweisend
- ein Rotorblatt (1),
- ein in das Rotorblatt (1) eingebettetes elektrisches System (4),
- ein System zum Bestimmen und Ableiten einer Ansammlung elektrostatischer Ladung in dem elektrischen System und
- mindestens eine schaltbare Verbindung (5) zwischen dem elektrischen System (4) und Masse, wobei
- die mindestens eine schaltbare Verbindung (5) steuerbar zwischen einem geöffneten Zustand und einem geschlossenen Zustand schaltbar ist, sodass
- das elektrische System (4) geerdet ist, wenn sich die mindestens eine schaltbare Verbindung (5) im geschlossenen Zustand befindet, und
- das elektrische System (4) nicht geerdet ist, wenn sich die mindestens eine schaltbare Verbindung (5) im geöffneten Zustand befindet.

2. Windenergieanlage (100) nach Anspruch 1, wobei
- das elektrische System (4) ein Rotorblattheizsystem (40) zum Verhindern einer Eisansammlung auf dem Rotorblatt (1) aufweist.

3. Windenergieanlage (100) nach Anspruch 1 oder 2, wobei
- das elektrische System (4) einen ersten Hauptleiter (41), der fest auf einer Saugseite (11) des Rotorblatts (1) angeordnet ist, und einen zweiten Hauptleiter (42), der fest auf einer Druckseite (12) des Rotorblatts (1) angeordnet ist, aufweist und
- die mindestens eine schaltbare Verbindung (5) elektrisch mit dem ersten Hauptleiter (41) und einem Masseanschluss gekoppelt ist und/oder die mindestens eine schaltbare Verbindung (5) elektrisch mit dem zweiten Hauptleiter (42) und dem Masseanschluss gekoppelt ist.

4. Windenergieanlage (100) nach den Ansprüchen 2 und 3, wobei
- das Heizsystem (40) während des Betriebs über den ersten Hauptleiter (41) und den zweiten Hauptleiter (42) mit elektrischer Leistung versorgt wird.

5. Windenergieanlage (100) nach einem der vorhergehenden Ansprüche, ferner aufweisend
- mindestens eine Nadelelektrode (2), die sich von einer Hinterkante (3) des Rotorblatts (1) aus erstreckt.

6. Verfahren zum Betreiben der Windenergieanlage (100) nach einem der Ansprüche 1 bis 5, aufweisend:
- Bestimmen einer ersten Information (I1), die repräsentativ dafür ist, ob das elektrische System (4) betrieben werden soll oder, falls es bereits in Betrieb ist, abgeschaltet werden soll;
- Erzeugen eines ersten Steuersignals (CS1) für die mindestens eine schaltbare Verbindung (5), welches dazu eingerichtet ist, die mindestens eine schaltbare Verbindung (5) in den geöffneten Zustand zu schalten, wenn die erste Information (I1) repräsentativ dafür ist, dass das elektrische System (4) betrieben werden soll;
- Erzeugen eines zweiten Steuersignals (CS2) für die mindestens eine schaltbare Verbindung (5), welches dazu eingerichtet ist, die mindestens eine schaltbare Verbindung (5) in den geschlossenen Zustand zu schalten, wenn die erste Information (I1) repräsentativ dafür ist, dass der Betrieb des elektrischen Systems (4) beendet werden soll;
- Bereitstellen einer zweiten Information (I2), die repräsentativ für eine elektrostatische Ladungsbildung in dem Rotorblatt (1) ist; und
- Bestimmen der ersten Information (I1) in Abhängigkeit von der zweiten Information (I2).

7. Verfahren nach Anspruch 6, wobei
- das erste Steuersignal (CS1) und das zweite Steuersignal (CS2) wiederholt und alternierend erzeugt werden.

8. Verfahren nach Anspruch 7, wobei
- unter Vereisungsbedingungen ein Zeitintervall von dem Erzeugen des ersten Steuersignals (CS1) bis zu dem Erzeugen des zweiten Steuersignals (CS2) länger ist als ein Zeitintervall von dem Erzeugen des zweiten Steuersignals (CS2) bis zu dem Erzeugen des nächsten ersten Steuersignals (CS1).

9. Verfahren nach Anspruch 8, wobei
- die Längen der Zeitintervalle vorbestimmt sind.

10. Computerprogramm, aufweisend Anweisungen, die, wenn das Programm von einer Steuereinrichtung (6) ausgeführt wird, die Steuereinrichtung (6) veranlassen, das Verfahren nach einem der Ansprüche 6 bis 9 durchzuführen.

11. Computerlesbarer Datenträger, auf dem das Computerprogramm nach Anspruch 10 gespeichert ist.

12. Steuereinrichtung (6), aufweisend Mittel zum Ausführen des Verfahrens nach einem der Ansprüche 6 bis 10.

13. Windenergieanlage (100) nach einem der Ansprüche 1 bis 5, umfassend die Steuereinrichtung (6) nach Anspruch 12.

## Revendications

1. Éolienne (100) comprenant
- une pale de rotor (1),
- un système électrique (4) intégré dans la pale de rotor (1),
- un système destiné à déterminer et dissiper une accumulation de charges électrostatiques dans le système électrique, et
- au moins un raccordement commutable (5) entre le système électrique (4) et la masse,
- l'au moins un raccordement commutable (5) étant commutable sur commande entre un état ouvert et un état fermé de telle sorte que
- lorsque l'au moins un raccordement commutable (5) est dans l'état fermé, le système électrique (4) est mis à la masse, et
- lorsque l'au moins un raccordement commutable (5) est dans l'état ouvert, le système électrique (4) n'est pas mis à la masse.

2. Éolienne (100) selon la revendication 1, dans laquelle
- le système électrique (4) comprend un système de chauffage de pale (40) destiné à empêcher l'accumulation de glace sur la pale de rotor (1).

3. Éolienne (100) selon la revendication 1 ou 2, dans laquelle
- le système électrique (4) comprend un premier conducteur principal (41) fermement disposé sur un côté aspiration (11) de la pale de rotor (1) et un deuxième conducteur principal (42) fermement disposé sur un côté pression (12) de la pale de rotor (1), et
- l'au moins un raccordement commutable (5) est couplé électriquement au premier conducteur principal (41) et à une borne de masse et/ou l'au moins un raccordement commutable (5) est couplé électriquement au deuxième conducteur principal (42) et à la borne de masse.

4. Éolienne (100) selon les revendications 2 et 3, dans laquelle
- en fonctionnement, le système de chauffage (40) est alimenté électriquement par le biais du premier conducteur principal (41) et du deuxième conducteur principal (42).

5. Éolienne (100) selon l'une quelconque des revendications précédentes, comprenant en outre
- au moins une électrode en forme d'aiguille (2) s'étendant depuis un bord de fuite (3) de la pale de rotor (1).

6. Procédé de fonctionnement de l'éolienne (100) selon l'une quelconque des revendications 1 à 5, comprenant
- la détermination de premières informations (I1) qui sont représentatives du fait que le système électrique (4) doit fonctionner ou doit être arrêté s'il est déjà en fonctionnement ;
- la génération d'un premier signal de commande (CS1) pour l'au moins un raccordement commutable (5), qui est conçu pour commuter l'au moins un raccordement commutable (5) dans un état ouvert si les premières informations (I1) sont représentatives du fait que le système électrique (4) doit fonctionner ;
- la génération d'un deuxième signal de commande (CS2) pour l'au moins un raccordement commutable (5), qui est conçu pour commuter l'au moins un raccordement commutable (5) dans un état fermé si les premières informations (I1) sont représentatives du fait que le fonctionnement du système électrique (4) doit être arrêté ;
- l'obtention de deuxièmes informations (I2) qui sont représentatives de la formation de charges électrostatiques dans la pale de rotor (1) ; et
- la détermination des premières informations (I1) en fonction des deuxièmes informations (I2).

7. Procédé selon la revendication 6, dans lequel
- le premier signal de commande (CS1) et le deuxième signal de commande (CS2) sont générés de façon répétée et en alternance.

8. Procédé selon la revendication 7, dans lequel
- dans des conditions de givrage, un intervalle de temps entre la génération du premier signal de commande (CS1) et la génération du deuxième signal de commande (CS2) est plus long qu'un intervalle de temps entre la génération du deuxième signal de commande (CS2) et la génération du premier signal de commande suivant (CS1).

9. Procédé selon la revendication 8, dans lequel
- les longueurs des intervalles de temps sont prédéterminées.

10. Programme informatique comprenant des instructions qui, lorsque le programme est exécuté par un dispositif de commande (6), amènent le dispositif de commande (6) à réaliser le procédé de l'une quelconque des revendications 6 à 9.

11. Support de données lisible par ordinateur sur lequel est stocké le programme informatique de la revendication 10.

12. Dispositif de commande (6) comprenant des moyens pour exécuter le procédé selon l'une quelconque des revendications 6 à 10.

13. Éolienne (100) selon l'une quelconque des revendications 1 à 5 comprenant le dispositif de commande (6) selon la revendication 12.
